# EUROPEAN PATENT APPLICATION

(11) **EP 2 965 955 A1**
(43) Date of publication of application: **13.01.2016**
(21) Application number: 15175722.6
(22) Date of filing: 07.07.2015
(51) Int. Cl.: B60R 22/22, B60R 22/26, B60N 2/39, B60N 2/68

(54) **VEHICLE SEAT**

(30) Priority: 10.07.2014 JP 2014142417
(71) Applicant: Toyota Jidosha Kabushiki Kaisha, Toyota-shi, Aichi 471-8571 (JP)
(72) Inventor: KATOH, Kohshi, Toyota-shi, Aichi 471-8571 (JP); TAKEUCHI, Eishi, Toyota-shi, Aichi 471-8571 (JP)
(74) Representative: Smith, Samuel Leonard

(57) **Abstract**

A vehicle seat includes: a main frame (30) joined to a vehicle body floor; a rocking frame (60) supported by the main frame (30) so as to be rockable about an axis along a vehicle front-rear direction, the rocking frame (60) fixed with a seat portion (90) configured to support hips of a seated occupant; and a lap belt (110) extending from a buckle (106) via a member or directly and configured to be placed across the waist of the seated occupant to restrain the waist, the lap belt (110) having an end portion fixed to the rocking frame (60) or the seat portion (90).

## Description

### BACKGROUND OF THE INVENTION

### 1. Field of the Invention

The invention relates to a vehicle seat.

### 2. Description of Related Art

In a vehicle seat described in WO2013/021497, a seat portion for an occupant to sit on is supported by a first seat frame portion and configured to be rockable in a roll direction of a vehicle. Specifically, the seat portion is configured to be rockable about a rotation axis that is inclined upward as going rearward in the vehicle in side view. With this configuration, the seat portion rocks along with the waist of the seated occupant during steering operation of the seated occupant, thereby making it possible to facilitate the steering operation.

### SUMMARY OF THE INVENTION

In the vehicle seat, however, a seat belt is buckled on the body of the seated occupant so that the waist of the seated occupant is restrained by a lap belt of the seat belt. Therefore, there is a possibility that rocking of the seat portion is limited by the lap belt. In view of this, the vehicle seat described above is preferably configured such that rocking of the seat portion is not prevented.

The invention provides a vehicle seat that is able to suppress the influence of a lap belt on rocking of a seat portion.

A vehicle seat according to an aspect of the invention includes: a main frame joined to a vehicle body floor; a rocking frame supported by the main frame so as to be rockable about an axis along a vehicle front-rear direction, the rocking frame fixed with a seat portion configured to support hips of a seated occupant; and a lap belt extending from a buckle via a member or directly and configured to be placed across a waist of the seated occupant to restrain the waist, the lap belt having an end portion fixed to the rocking frame or the seat portion.

In the above-described aspect, the main frame is joined to the vehicle body floor. The rocking frame is supported by the main frame so as to be rockable about the axis along the vehicle front-rear direction. The seat portion configured to support the hips of the seated occupant is fixed to the rocking frame. Consequently, the seat portion is allowed to rock about the axis along the vehicle front-rear direction together with the rocking frame. With this configuration, the seat portion rocks relative to the main frame in response to the movement of the body of the seated occupant during the steering operation of the seated occupant, thereby making it possible to facilitate the steering operation.

Herein, the lap belt extends from the buckle via the member or directly and is placed across the waist of the seated occupant to restrain the waist. Further, the end portion of the lap belt is fixed to the rocking frame or the seat portion. Consequently, at the time of rocking of the seat portion, the end portion of the lap belt rocks along with the seat portion so that it is possible to suppress the influence of the lap belt on rocking of the seat portion compared to a case where the end portion of the lap belt is fixed to the vehicle body floor.

In the above-described aspect, the lap belt may be provided with a lap-side branch belt extending from an intermediate portion in a longitudinal direction of the lap belt and the lap-side branch belt may join the lap belt and the vehicle body floor to each other so as to allow rocking of the seat portion.

According to the above-described configuration, the lap-side branch belt provided to the lap belt joins the lap belt and the vehicle body floor to each other so as to allow rocking of the seat portion. Consequently, even when the lap belt is joined to the vehicle body floor via the lap-side branch belt, it is possible to suppress the influence of the lap-side branch belt on rocking of the seat portion.

In the above-described configuration, a flexibility of the lap-side branch belt may be higher than a flexibility of the lap belt.

According to the above-described configuration, since the flexibility of the lap-side branch belt is higher than that of the lap belt, the lap-side branch belt expands and contracts at the time of rocking of the seat portion so that it is possible to allow the seat portion to rock. With this configuration, using the flexibility of the lap-side branch belt, it is possible to suppress the influence of the lap-side branch belt on rocking of the seat portion.

In the above-described configuration, the lap belt and the vehicle body floor may be joined to each other via the lap-side branch belt in a state where the lap-side branch belt is slackened.

According to the above-described configuration, it is possible to allow rocking of the seat portion by a slack portion (excess length portion) in the lap-side branch belt. Consequently, it is possible to suppress the influence of the lap-side branch belt on rocking of the seat portion with the simple configuration.

In the above-described aspect, a backrest portion configured to support a back of the seated occupant may be provided and fixed to the main frame.

According to the above-described configuration, since the backrest portion configured to support the back of the seated occupant is fixed to the main frame, the frames supporting the seat portion and the backrest portion in the vehicle seat are able to be integrated with each other.

In the above-described aspect, the buckle is disposed at a middle in a width direction of the seat portion, and a pair of the lap belts extends from the buckle toward outer sides in a seat width direction, respectively.

According to the above-described configuration, a seat belt of the vehicle seat is able to be configured as a four-point or more seat belt, for example, by providing a pair of shoulder belts configured to restrain the shoulders of the seated occupant. Consequently, for example, it is possible to improve the restraint of the seated occupant and, at the same time, it is possible to apply the vehicle seat as a racing seat.

In the above-described aspect, the buckle may be provided on one side in a width direction of the seat portion and the lap belt may extend from the one side in the width direction of the seat portion to the other side in the width direction of the seat portion so as to be placed across the waist of the seated occupant.

According to the above-described configuration, since the lap belt extends from the buckle provided on the one side in the width direction of the seat portion to the other side in the width direction of the seat portion so as to be placed across the waist of the seated occupant, a seat belt of the vehicle seat can be configured as a so-called three-point seat belt.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view, as seen obliquely from the seat left front side, of a vehicle seat according to this embodiment;
FIG. 2 is a side view, as seen from the seat left side, of the vehicle seat shown in FIG. 1;
FIG. 3 is a rear view, as seen from the seat rear side, of the vehicle seat shown in FIG. 1;
FIG. 4 is a bottom view, as seen from the seat lower side, of the vehicle seat shown in FIG. 1;
FIG. 5 is a perspective view, as seen obliquely from the seat lower left side, of the vehicle seat shown in FIG. 1;
FIG. 6 is an enlarged perspective view of a lower surface portion of a seat portion shown in FIG. 5;
FIG. 7 is an exemplary diagram of a lap belt shown in FIG. 1; and
FIG. 8 is a schematic diagram as seen from the seat front side, wherein a seat belt device shown in FIG. 1 is a three-point seat belt device.

### DETAILED DESCRIPTION OF EMBODIMENTS

Hereinbelow, a vehicle seat 10 according to this embodiment will be described with reference to the drawings. Note that an arrow FR shown in the drawings as appropriate indicates a seat front side, an arrow UP indicates a seat upper side, and an arrow LH indicates a seat left side (one side in a seat width direction). The seat front side, the seat upper side, and the seat left side respectively coincide with a vehicle front side, a vehicle upper side, and a vehicle left side of a vehicle in which the vehicle seat 10 is mounted.

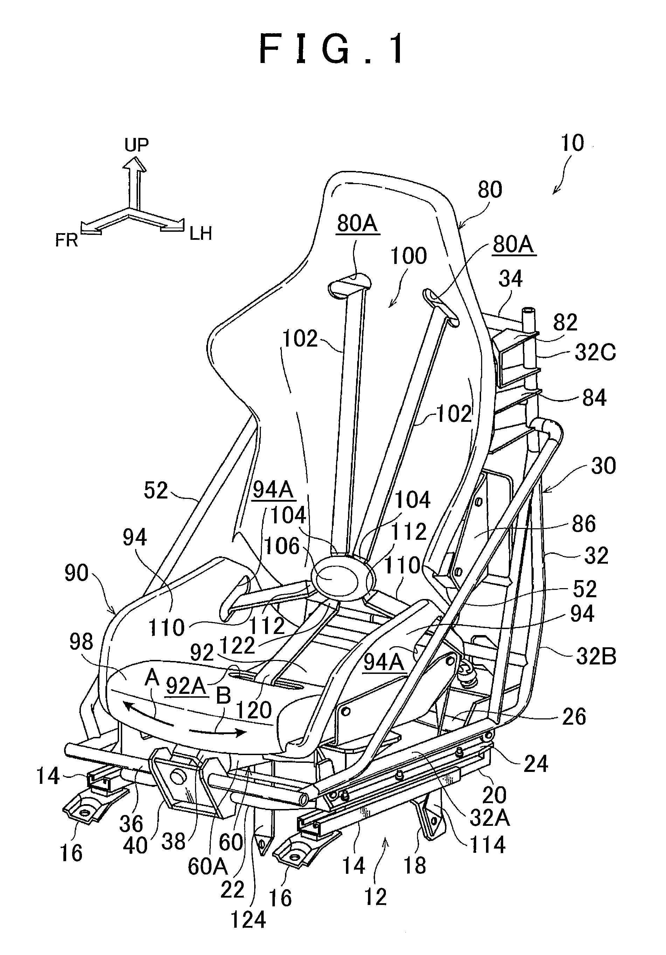

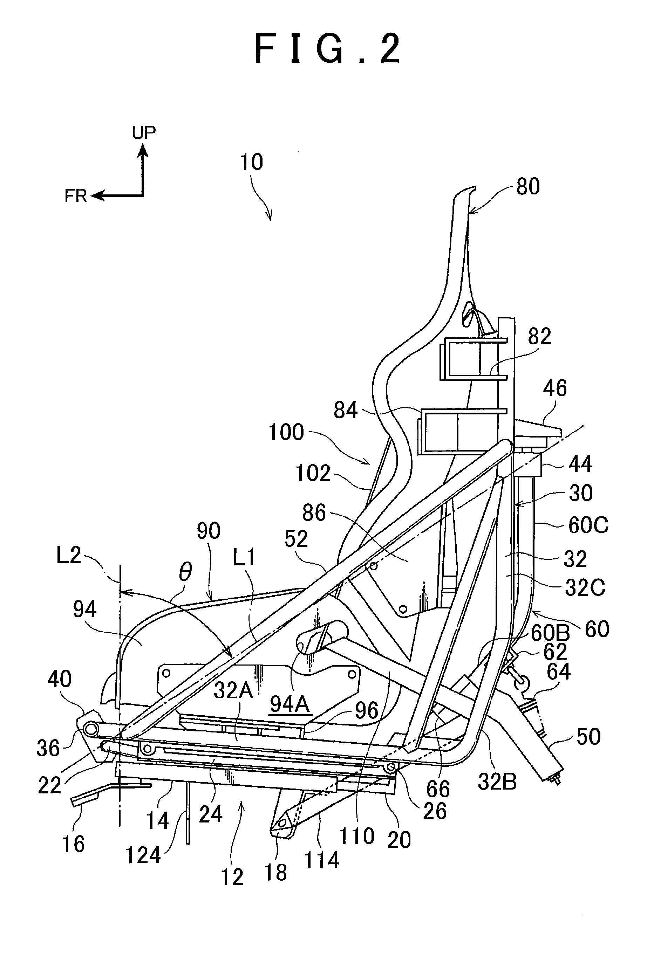

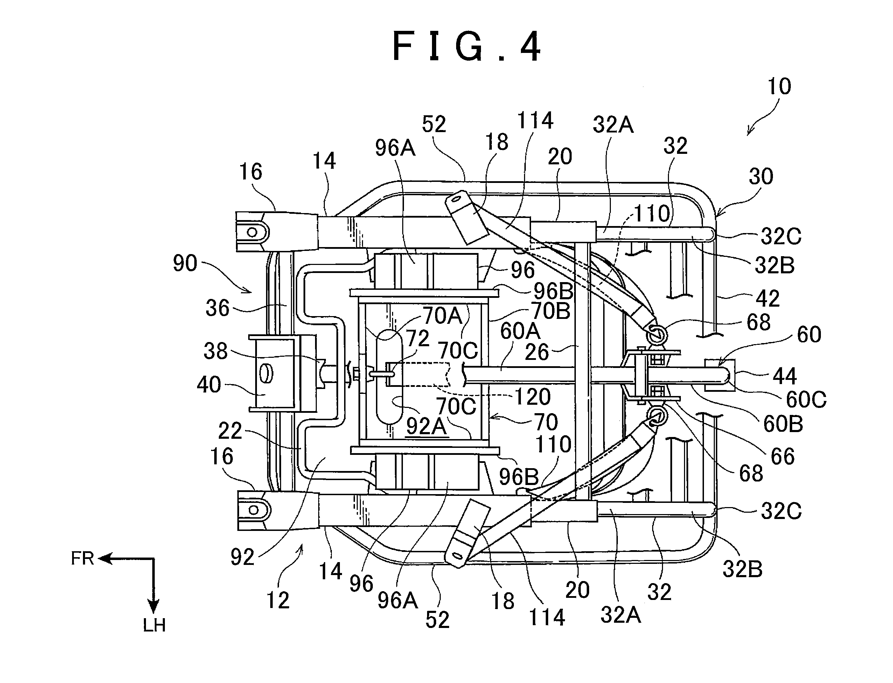

As shown in FIGS. 1 to 4, the vehicle seat 10 is a driver's seat of a vehicle. The vehicle seat 10 includes a seat portion 90 for an occupant to sit on and a backrest portion 80 configured to mainly support the back of the seated occupant. The vehicle seat 10 further includes a main frame 30 supporting the backrest portion 80. The seat portion 90 is rockably supported by the main frame 30 via a rocking frame 60 (see FIGS. 2 to 4). The main frame 30 is joined to a vehicle body floor (not shown) of the vehicle via a slide mechanism 12 (which is a component to be grasped as a "link mechanism" in a broad sense). The vehicle seat 10 is provided with a seat belt device 100 configured to restrain the body of the seated occupant. Hereinbelow, the respective configurations will be described.

The slide mechanism 12 forms a lower portion of the vehicle seat 10. The slide mechanism 12 includes a pair of guide rails 14. The pair of guide rails 14 each extend in a seat front-rear direction and are disposed in parallel to each other in a seat left-right direction. A front end portion of each guide rail 14 is fixed to the vehicle body floor via a front leg bracket 16, while a rear end portion of each guide rail 14 is fixed to the vehicle body floor via a rear leg bracket 18 (which is a component to be grasped as a "fixing member" in a broad sense).

Each guide rail 14 is provided with an upper rail 20. The upper rail 20 is supported to be slidable in the seat front-rear direction relative to the guide rail 14. Normally, the upper rail 20 is locked to the guide rail 14 by a locking mechanism (not shown) so that the upper rail 20 is not allowed to move relative to the guide rail 14. On the other hand, an operating lever 22 is coupled to the locking mechanisms and, by operating the operating lever 22, the locked state between the upper rails 20 and the guide rails 14 due to the locking mechanisms is released so that the upper rails 20 are allowed to slide in the seat front-rear direction relative to the guide rails 14.

Further, the upper rails 20 are respectively provided with risers 24 for attaching the main frame 30 which will be described later. The risers 24 each extend in the seat front-rear direction on the seat upper side of the upper rail 20 and rear end portions of the risers 24 are joined to each other via a joining pipe 26 extending in the seat width direction.

The main frame 30 forms the skeleton of the vehicle seat 10 and is provided on the seat upper side of the slide mechanism 12. The main frame 30 is formed from a plurality of pipe members and so on into a generally hammock shape and is bent in a generally inverted L-shape as seen from the seat left side. Details will be described hereinbelow.

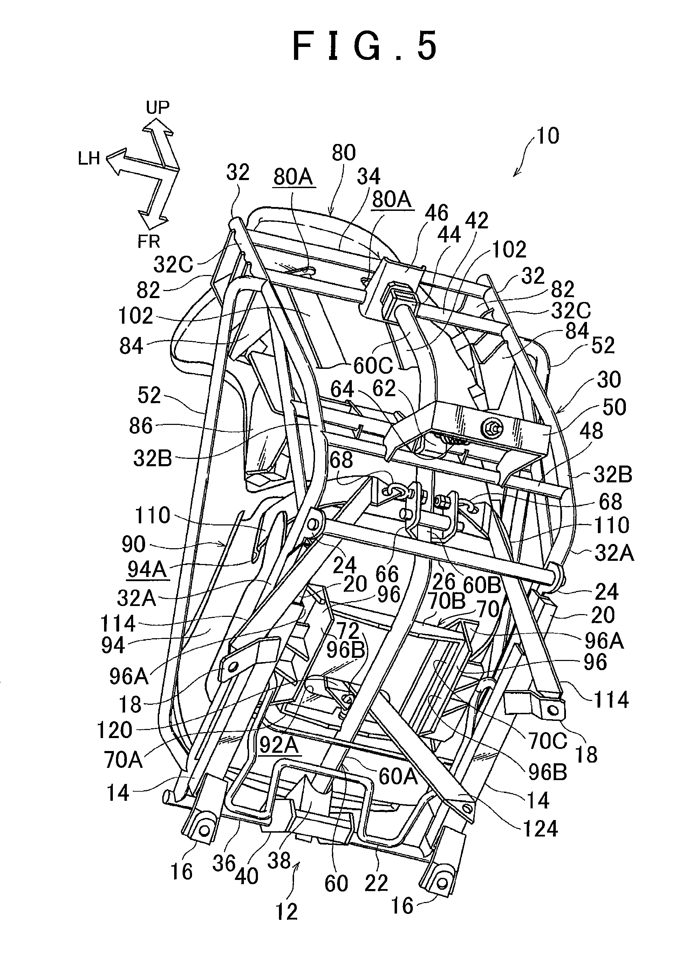

As shown in FIG. 5, the main frame 30 includes a pair of side frame portions 32 forming both side portions in a width direction of the main frame 30 and each side frame portion 32 is formed in a generally inverted L-shape as seen from the seat left side. Specifically, each side frame portion 32 includes a side frame lower portion 32A extending in the seat front-rear direction, a side frame inclined portion 32B that is inclined toward the seat upper side as going toward the seat rear side from a rear end of the side frame lower portion 32A, and a side frame upper portion 32C extending toward the seat upper side from an upper end of the side frame inclined portion 32B. The side frame lower portions 32A are disposed on the seat upper side of the risers 24 of the slide mechanism 12 and fastened to the risers 24. With this configuration, the main frame 30 is joined to the vehicle body floor via the slide mechanism 12. By operating the operating lever 22 of the slide mechanism 12, the main frame 30 is allowed to slide in the seat front-rear direction along with the upper rails 20 (see FIG. 1).

An upper frame portion 34 extending in the seat width direction is bridged between upper end portions of the pair of side frame portions 32 so that the upper end portions of the pair of side frame portions 32 are joined to each other via the upper frame portion 34. On the other hand, a front frame portion 36 extending in the seat width direction is bridged between front end portions of the pair of side frame portions 32 so that the front end portions of the pair of side frame portions 32 are joined to each other via the front frame portion 36. A first ball joint 38 (which is a component to be grasped as a "connecting member" in a broad sense) for connecting the rocking frame 60 which will be described later is fixed to the front frame portion 36 at a middle portion in a longitudinal direction thereof via a joint bracket 40.

Further, a first intermediate frame portion 42 is provided on the seat lower side of the upper frame portion 34. The first intermediate frame portion 42 extends in the seat width direction and joins the side frame upper portions 32C of the pair of side frame portions 32 to each other. A second ball joint 44 (which is a component to be grasped as a "connecting member" in a broad sense) for connecting the rocking frame 60 which will be described later is fixed to the first intermediate frame portion 42 at a middle portion in a longitudinal direction thereof via a joint bracket 46. The second ball joint 44 is disposed on the seat rear and upper side with respect to the first ball joint 38 provided to the front frame portion 36.

Further, a second intermediate frame portion 48 is provided on the seat lower side of the first intermediate frame portion 42. The second intermediate frame portion 48 extends in the seat width direction and joins the side frame inclined portions 32B of the pair of side frame portions 32 to each other. A first locking bracket 50 for locking one end portion of a later-described centering spring 64 is provided to the second intermediate frame portion 48 at a middle portion in a longitudinal direction thereof. The first locking bracket 50 is, as seen from the seat front side, bent in a generally U-shape that is open toward approximately the seat upper side, and both end portions in a longitudinal direction of the first locking bracket 50 are joined to the second intermediate frame portion 48 by welding or the like.

As shown in FIG. 1, a pair of reinforcements 52 are provided to the main frame 30 at both side portions thereof in the seat width direction. Each reinforcement 52 is formed in a generally elongated shape and inclined toward the seat upper side as going toward the seat rear side in side view. Each reinforcement 52 has a rear end portion joined to an upper portion of the side frame upper portion 32C and a front end portion joined to a front portion of the side frame lower portion 32A. With this configuration, the strength of the main frame 30 is enhanced by the reinforcements 52 and, at the same time, the protection performance for the seated occupant upon occurrence of a vehicle side collision or the like is enhanced by the reinforcements 52.

As shown in FIG. 5, the rocking frame 60 is formed from a pipe member and so on into a generally inverted L-shape as seen from the seat left side. Specifically, the rocking frame 60 includes a rocking frame lower portion 60A extending in the seat front-rear direction, a rocking frame inclined portion 60B that is inclined toward the seat upper side as going toward the seat rear side from a rear end of the rocking frame lower portion 60A, and a rocking frame upper portion 60C extending toward the seat upper side from an upper end of the rocking frame inclined portion 60B. The rocking frame 60 has a front end portion connected to the first ball joint 38 so as to be reliable and an upper end portion connected to the second ball joint 44 so as to be rollable. With this configuration, both end portions in a longitudinal direction of the rocking frame 60 are supported by the main frame 30 so that, as shown in FIG. 2, the rocking frame 60 is rockable about a virtual axis L1 as an "axis" connecting between the front end portion of the rocking frame 60 and the upper end portion of the rocking frame 60. In side view, an angle θ defined between a reference line L2 extending in a seat up-down direction and the virtual axis L1 is set to about 60 degrees. That is, "rockable about an axis along a vehicle front-rear direction" in the invention includes the case where the virtual axis L1 is inclined toward the seat upper side as going toward the seat rear side in side view.

As shown in FIGS. 2 and 5, a second locking bracket 62 is fixed to the rocking frame inclined portion 60B at a position on the seat upper side of the first locking bracket 50. The centering spring 64 (which is a component to be grasped as a "biasing member" in a broad sense) formed as a tension coil spring is stretched between the second locking bracket 62 and the first locking bracket 50. The centering spring 64 is disposed so as to be inclined toward the seat lower side as going toward the seat rear side in side view. With this configuration, the rocking frame 60 is biased toward the seat lower side and the seat rear side by the centering spring 64 so that the rocking frame 60 is held (centered) at an initial position (position shown in FIG. 1) by the biasing force of the centering spring 64.

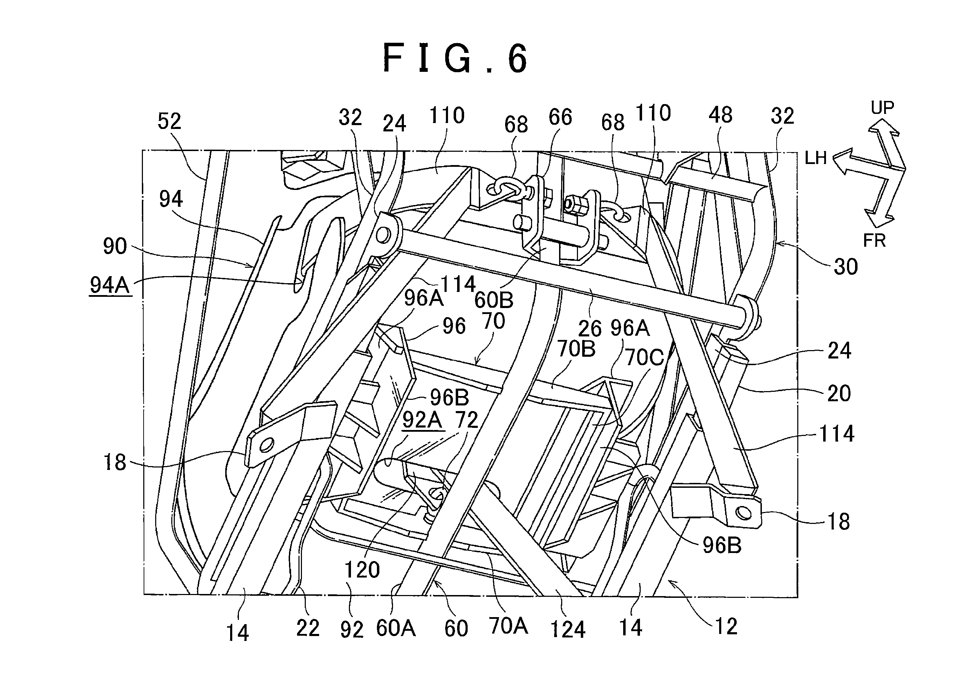

As shown in FIGS. 5 and 6, a fixing bracket 66 for fixing later-described lap belts 110 is provided to the rocking frame inclined portion 60B at a position on the seat lower side of the second locking bracket 62. The fixing bracket 66 is formed in a shape of a generally U-shaped plate that is open toward approximately the seat lower side, and a top wall of the fixing bracket 66 is joined to the rocking frame inclined portion 60B by welding or the like. I-bolts 68 are respectively fastened to side walls of the fixing bracket 66 and each I-bolt 68 protrudes outward in the seat width direction from the corresponding side wall of the fixing bracket 66.

A mounting frame 70 for mounting the seat portion 90 which will be described later is provided on the seat upper side of the rocking frame lower portion 60A. The mounting frame 70 is formed in a generally hollow rectangular parallelepiped shape that is open in seat up-down directions. A middle portion in the seat width direction of a front wall 70A of the mounting frame 70 and a middle portion in the seat width direction of a rear wall 70B of the mounting frame 70 are joined to the rocking frame lower portion 60A by welding or the like. Further, an I-bolt 72 for fixing a later-described crotch belt 120 is fastened to the front wall 70A at a middle portion thereof in the seat width direction and protrudes toward the seat rear side from the front wall 70A.

As shown in FIGS. 1 to 3, the backrest portion 80 is provided on the seat front side of the upper frame portion 34 in the main frame 30. The backrest portion 80 is made of a resin material (e.g. carbon fiber reinforced plastic) and configured as a backrest of the shell type (the type that forms a so-called shell shape formed in a plate shape as a whole and open toward the seat front side). The backrest portion 80 is fixed to the main frame 30 via three pairs of support brackets 82, 84, and 86 each forming a pair in the seat left-right direction. That is, in the vehicle seat 10 of this embodiment, the backrest portion 80 is configured to be unable to move relative to the main frame 30.

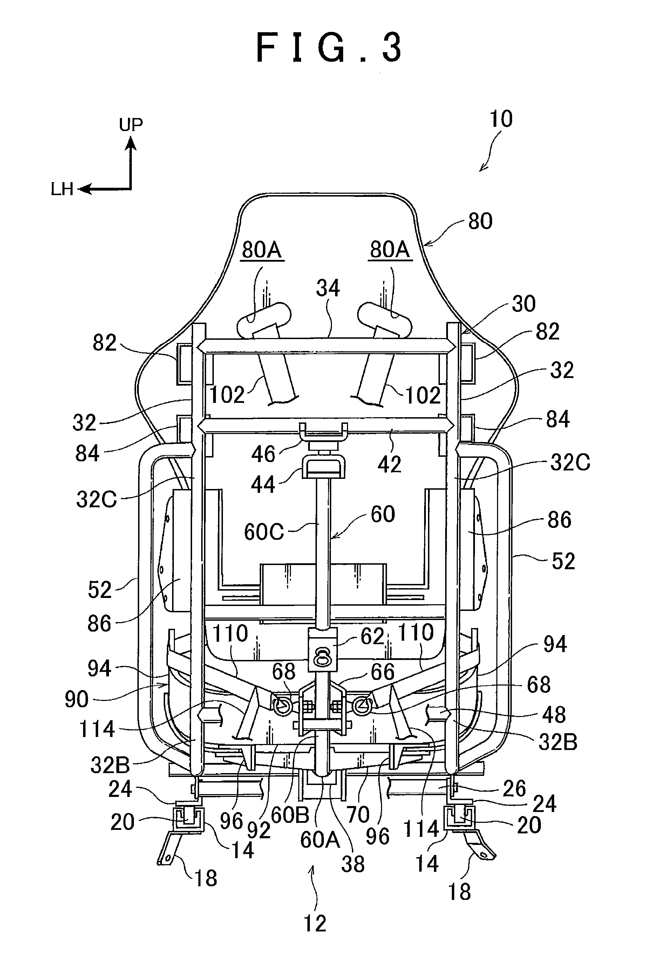

An upper portion of the backrest portion 80 is configured to be disposed on the seat rear side with respect to the head of the seated occupant so that the backrest portion 80 also serves as a headrest for supporting the head of the seated occupant. Further, as shown in FIGS. 2 and 3, a pair of shoulder belt insertion holes 80A for inserting later-described shoulder belts 102 therethrough are respectively formed through the backrest portion 80 at its portions on the seat upper side (specifically, at its portions on the seat upper side with respect to the shoulders of the seated occupant). Each shoulder belt insertion hole 80A is formed in a generally rectangular shape having its longitudinal direction in the seat width direction and is inclined toward the seat lower side as going outward in the seat width direction as seen from the seat front side.

As shown in FIG. 1, the seat portion 90 is provided on the seat upper side of the rocking frame lower portion 60A in the rocking frame 60. The seat portion 90 is made of a resin material (e.g. carbon fiber reinforced plastic) and formed in a shape of a generally U-shaped plate that is open toward the seat upper side as seen from the seat front side. That is, the seat portion 90 includes a seat portion body portion 92 having its plate thickness direction in the approximately seat up-down direction and a pair of support portions 94 extending toward the seat upper side from both ends in the seat width direction of the seat portion body portion 92. With this configuration, mainly the hips of the seated occupant are supported by the seat portion body portion 92, while the femurs of the seated occupant are supported by the support portions 94.

As shown in FIGS. 5 and 6, a pair of mounting brackets 96 are integrally provided on a lower surface of the seat portion 90 at both side portions thereof in the seat width direction. Each mounting bracket 96 is formed in a shape of a generally inverted L-shaped plate as seen from the seat front side and extends in the seat front-rear direction. Specifically, each mounting bracket 96 includes a top wall portion 96A having its plate thickness direction in the approximately seat up-down direction and a side wall portion 96B extending toward the seat lower side from an inner end in the seat width direction of the top wall portion 96A. The top wall portion 96A is fixed to the seat portion 90. The mounting brackets 96 are respectively disposed on the outer sides in the seat width direction of the mounting frame 70 fixed to the rocking frame 60 and the side wall portions 96B of the mounting brackets 96 are respectively fastened to side wall portions 70C of the mounting frame 70. With this configuration, the seat portion 90 and the rocking frame 60 are integrated with each other so that the seat portion 90 is allowed to rock about the virtual axis L1 along with the rocking frame 60 in response to the movement of the body of the seated occupant during traveling of the vehicle.

As shown in FIG. 1, the seat portion body portion 92 is integrally provided at an upper surface of a front portion thereof with a cushion portion 98. The cushion portion 98 is made of foam such as urethane foam and configured to support the femurs of the seated occupant. The cushion portion 98 may be omitted in the seat portion 90.

Further, as shown in FIGS. 5 and 6, a crotch belt insertion hole 92A for inserting the later-described crotch belt 120 therethrough is formed through, in the seat up-down direction, the seat portion body portion 92 at a front portion thereof in the middle in the seat width direction. The crotch belt insertion hole 92A is formed in a generally rectangular shape having its longitudinal direction in the seat width direction and is disposed on the seat upper side of the I-bolt 72. The cushion portion 98 is formed, at a position facing the crotch belt insertion hole 92A in the seat up-down direction, with a hole portion corresponding to the crotch belt insertion hole 92A.

Further, as shown in FIG. 1, lap belt insertion holes 94A for inserting the later-described lap belts 110 therethrough are respectively formed through, in the seat width direction, the support portions 94 of the seat portion 90 at rear portions thereof. Each lap belt insertion hole 94A is formed in a generally rectangular shape having its longitudinal direction in the seat front-rear direction and is inclined toward the seat upper side as going toward the seat rear side in side view.

As shown in FIG. 1, the seat belt device 100 includes a pair of the shoulder belts 102 configured to restrain the shoulders (chest) of the seated occupant, a pair of the lap belts 110 configured to restrain the waist of the seated occupant, and the crotch belt 120 configured to be disposed across the crotch (specifically, between the femurs) of the seated occupant to restrain the movement of the seated occupant toward the seat front side. That is, the seat belt device 100 is configured as a so-called five-point seat belt device.

Each shoulder belt 102 is made of cloth and formed in a generally elongated belt shape. One end portion in a longitudinal direction of the shoulder belt 102 is, although not shown, fixed to the vehicle body floor of the vehicle via an anchor plate (not shown) on the seat rear side of the backrest portion 80. The shoulder belt 102 extends toward the seat upper side from its one end portion in the longitudinal direction and is inserted through the shoulder belt insertion hole 80A of the backrest portion 80 from the seat rear side to the seat front side. A first tongue plate 104 is provided at the other end portion in the longitudinal direction of the shoulder belt 102 and configured to be engageable with a buckle 106 disposed at the middle in the width direction of the seat portion 90. With this configuration, the shoulder belts 102 extending to the seat front side through the shoulder belt insertion holes 80A of the backrest portion 80 are placed across the upper half of the body of the seated occupant and then the first tongue plates 104 are engaged with the buckle 106 so that the shoulder belts 102 are worn by the seated occupant.

As shown in FIGS. 1 to 6, each lap belt 110 is made of cloth and formed in a generally elongated belt shape. One end portion in a longitudinal direction of the lap belt 110 is fixed to the I-bolt 68 of the rocking frame 60 on the seat rear side of the backrest portion 80 (see FIGS. 3 to 6). The lap belt 110 extends outward in the seat width direction from its one end portion in the longitudinal direction and is inserted through the lap belt insertion hole 94A of the seat portion 90 from the outer side in the seat width direction to the inner side in the seat width direction. A second tongue plate 112 (see FIG. 1) is provided at the other end portion in the longitudinal direction of the lap belt 110 and configured to be engageable with the buckle 106 (see FIG. 1). With this configuration, the lap belts 110 extending to the inner side in the seat width direction through the lap belt insertion holes 94A of the seat portion 90 are placed across the waist of the seated occupant and then the second tongue plates 112 are engaged with the buckle 106 so that the lap belts 110 are worn by the seated occupant. In other words, the lap belts 110 extend from the buckle 106 via the second tongue plates 112 and the one end portions in the longitudinal direction of the lap belts 110 are fixed to the rocking frame 60. That is, the second tongue plate 112 is an example of a "member" of the invention.

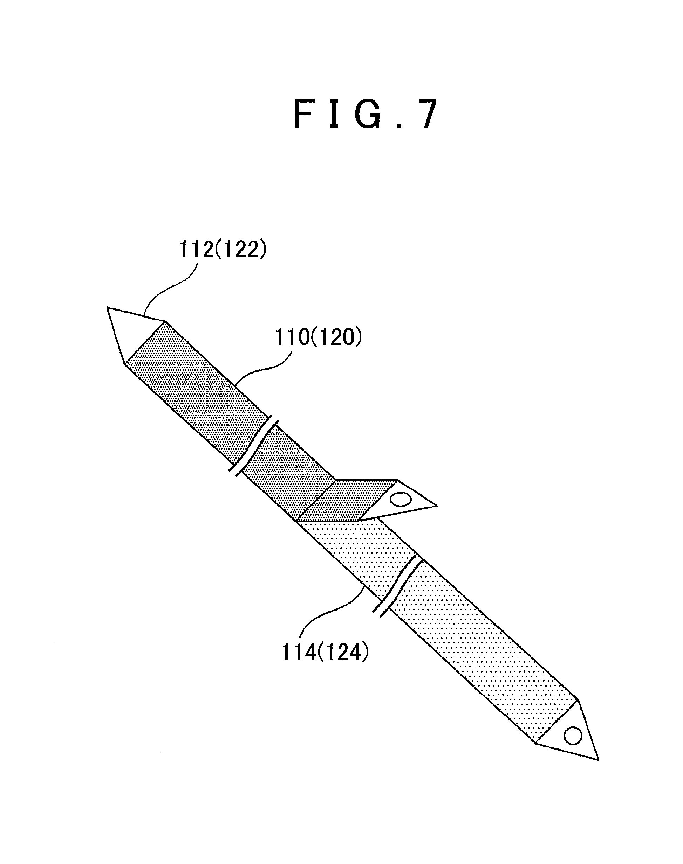

As shown in FIG. 7, the lap belt 110 is provided with a lap-side branch belt 114 for joining the lap belt 110 to the vehicle body floor. Like the lap belt 110, the lap-side branch belt 114 is made of cloth and formed in a generally elongated belt shape. As shown in FIGS. 3 to 6, one end portion in a longitudinal direction of the lap-side branch belt 114 is joined to a portion on one end side in the longitudinal direction of the lap belt 110 by sewing or the like, while the other end portion in the longitudinal direction of the lap-side branch belt 114 is fixed to the vehicle body floor. Specifically, the other end portion in the longitudinal direction of the lap-side branch belt 114 is fastened to the vehicle body floor by a fastening member such as a bolt (not shown) along with the rear leg bracket 18 configured to fix the guide rail 14 to the vehicle body floor.

The flexibility of the lap-side branch belt 114 is set higher than that of the lap belt 110. That is, it is configured that the tension generated in the lap-side branch belt 114 when the lap-side branch belt 114 is pulled in its longitudinal direction is smaller than that generated in the lap belt 110 when the lap belt 110 is pulled in its longitudinal direction. Specifically, the degree of flexibility of the lap-side branch belt 114 (tension of the lap-side branch belt 114) is determined so as to allow the movement of the seat portion 90 when the seat portion 90 rocks about the virtual axis L1 in response to the movement of the body of the seated occupant during traveling of the vehicle.

The crotch belt 120 is made of cloth and formed in a generally elongated belt shape and is configured in the same manner as the lap belt 110. That is, as shown in FIG. 7, the crotch belt 120 is provided with a crotch-side branch belt 124 for joining the crotch belt 120 to the vehicle body floor. The crotch-side branch belt 124 is made of cloth and formed in a generally elongated belt shape. The flexibility of the crotch-side branch belt 124 is set higher than that of the crotch belt 120.

As shown in FIGS. 5 and 6, one end portion in a longitudinal direction of the crotch belt 120 is fixed to the I-bolt 72 of the rocking frame 60 on the seat lower side of the seat portion 90. The crotch belt 120 extends toward the seat upper side from its one end portion in the longitudinal direction and is inserted through the crotch belt insertion hole 92A of the seat portion 90 from the seat lower side to the seat upper side. As shown in FIG. 1, a third tongue plate 122 is provided at the other end portion in the longitudinal direction of the crotch belt 120 and configured to be engageable with the buckle 106. With this configuration, the crotch belt 120 extending to the seat upper side through the crotch belt insertion hole 92A is placed between the femurs of the seated occupant and then the third tongue plate 122 is engaged with the buckle 106 so that the crotch belt 120 is worn by the seated occupant. In other words, the crotch belt 120 extends from the buckle 106 via the third tongue plate 122 and the one end portion in the longitudinal direction of the crotch belt 120 is fixed to the rocking frame 60. With this configuration, the movement of the seated occupant toward the seat front side (specifically, the occurrence of a so-called submarine phenomenon in which the body of the seated occupant slips forward under the lap belts 110) is suppressed by the crotch belt 120.

One end portion in a longitudinal direction of the crotch-side branch belt 124 is joined to a portion on one end side in the longitudinal direction of the crotch belt 120 by sewing or the like, while the other end portion in the longitudinal direction of the crotch belt 120 is fixed to the vehicle body floor via an anchor plate (not shown). Further, also in the case of the crotch belt 120, the degree of flexibility of the crotch-side branch belt 124 is determined so as to allow the movement of the seat portion 90 when the seat portion 90 rocks about the virtual axis L1 in response to the movement of the body of the seated occupant during traveling of the vehicle.

Now, the actions and effects of this embodiment will be described.

When the occupant is seated on the vehicle seat 10 configured as described above, the hips of the seated occupant are supported by the seat portion 90 and the back of the seated occupant is supported by the backrest portion 80. Then, when turning the vehicle to the right by the steering operation of the seated occupant, the body of the seated occupant attempts to move so that the waist of the seated occupant rotates clockwise as seen from the seat front side. In this event, since the seat portion 90 is supported by the main frame 30 via the rocking frame 60 so as to be rockable about the virtual axis L1, the seat portion 90 rocks to one side (arrow A direction side in FIG. 1) about the virtual axis L1 along with the waist of the seated occupant and the rocking frame 60 against the biasing force of the centering spring 64.

On the other hand, when turning the vehicle to the left by the steering operation of the seated occupant, the body of the seated occupant attempts to move so that the waist of the seated occupant rotates counterclockwise as seen from the seat front side. Therefore, the seat portion 90 rocks to the other side (arrow B direction side in FIG. 1) about the virtual axis L1 along with the waist of the seated occupant and the rocking frame 60 against the biasing force of the centering spring 64. In this manner, in the vehicle seat 10, the seat portion 90 rocks about the virtual axis L1 in response to the movement of the body of the seated occupant during the steering operation of the seated occupant, thereby making it possible to facilitate the steering operation of the seated occupant.

Herein, the vehicle seat 10 is provided with the seat belt device 100 so that the waist of the seated occupant is restrained by the lap belts 110 of the seat belt device 100. The lap belts 110 extend from the buckle 106 via the second tongue plates 112 and the one end portions in the longitudinal direction of the lap belts 110 are fixed to the I-bolts 68 of the rocking frame 60. Therefore, since the one end portions in the longitudinal direction of the lap belts 110 rock along with the seat portion 90, it is possible to prevent the lap belts 110 from restraining rocking of the seat portion 90 compared to a case where the one end portions in the longitudinal direction of the lap belts 110 are fixed to the vehicle body floor. With this configuration, it is possible to suppress the influence of the lap belts 110 on rocking of the seat portion 90. Therefore, it is possible to improve the steering maneuverability of the seated occupant while restraining the waist of the seated occupant by the lap belts 110.

The lap belts 110 are each provided with the lap-side branch belt 114 whose one end portion in the longitudinal direction is joined to the lap belt 110 and whose other end portion in the longitudinal direction is fixed to the vehicle body floor. In addition, the flexibility of the lap-side branch belt 114 is set higher than that of the lap belt 110. Accordingly, the lap-side branch belts 114 expand and contract at the time of rocking of the seat portion 90 so that it is possible to allow the seat portion 90 to rock. With this configuration, using the flexibility of the lap-side branch belts 114, it is possible to suppress the influence of the lap-side branch belts 114 on rocking of the seat portion 90.

The seat belt device 100 includes the pair of shoulder belts 102, the pair of lap belts 110, and the crotch belt 120. That is, the seat belt device 100 is configured as a so-called five-point seat belt device. With this configuration, it is possible to enhance the restraint of the seated occupant by the seat belt device 100 and, at the same time, it is possible to apply the vehicle seat 10 as a racing seat.

The crotch belt 120 extends from the buckle 106 via the third tongue plate 122 and the one end portion in the longitudinal direction of the crotch belt 120 is fixed to the I-bolt 72 of the rocking frame 60. Therefore, since the one end portion in the longitudinal direction of the crotch belt 120 rocks along with the seat portion 90, it is possible to prevent rocking of the seat portion 90 from being restrained even when the seat belt device 100 is configured as the five-point seat belt device.

The crotch belt 120 is provided with the crotch-side branch belt 124 whose one end portion in the longitudinal direction is joined to the crotch belt 120 and whose other end portion in the longitudinal direction is fixed to the vehicle body floor. In addition, the flexibility of the crotch-side branch belt 124 is set higher than that of the crotch belt 120. Accordingly, the crotch-side branch belt 124 expands and contracts at the time of rocking of the seat portion 90 so that it is possible to allow the seat portion 90 to rock. With this configuration, using the flexibility of the crotch-side branch belt 124, it is possible to suppress the influence of the crotch-side branch belt 124 on rocking of the seat portion 90.

In the vehicle seat 10, the backrest portion 80 is supported by the main frame 30 and the seat portion 90 is supported by the main frame 30 via the rocking frame 60. With this configuration, the frames supporting the seat portion 90 and the backrest portion 80 are able to be integrated with each other.

In this embodiment, the seat belt device 100 of the vehicle seat 10 is configured as the five-point seat belt device. However, the seat belt device 100 may be configured as a three-point seat belt device or may be configured as a four-point seat belt device with the crotch belt 120 omitted.

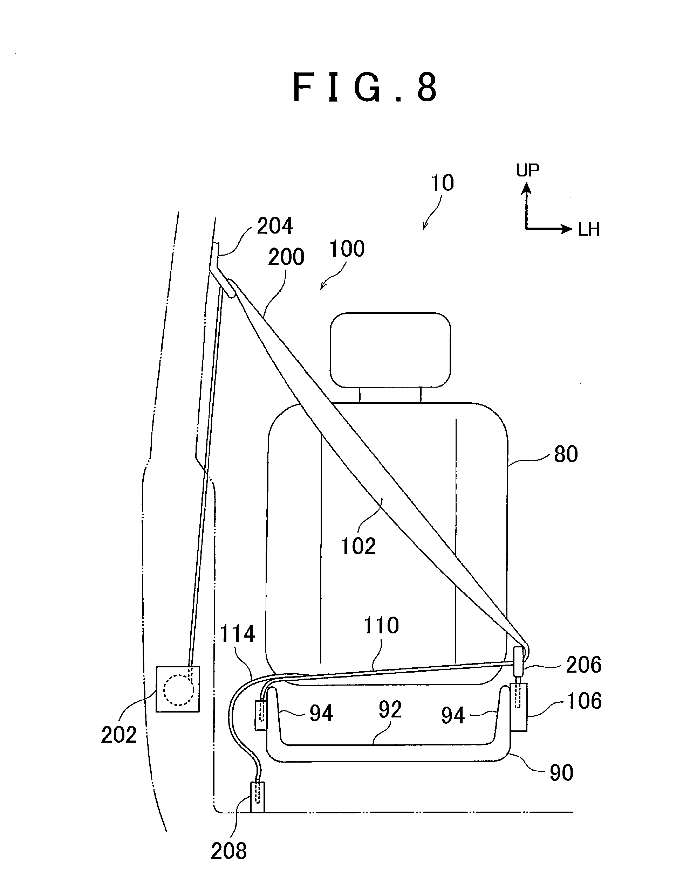

For example, referring to FIG. 8, a description will be given of a case where a seat belt device 100 is configured as a three-point seat belt device. In this case, a seat belt 200 configured to restrain the body of a seated occupant is drawn out from a retractor 202 provided on a center pillar or the like of a vehicle. Then, the seat belt 200 drawn out from the retractor 202 is inserted through a through anchor 204 of the vehicle and an end portion of the seat belt 200 is fixed to a support portion 94 on the seat right side of a seat portion 90. The seat belt 200 is inserted through a tongue plate 206.

On the other hand, a buckle 106 is fixed to a support portion 94 on the seat left side (one side in a width direction) of the seat portion 90. Then, when the tongue plate 206 is engaged with the buckle 106, the seat belt 200 is worn by the body of the seated occupant. With this configuration, the seat belt 200 extending from the buckle 106 to the through anchor 204 side via the tongue plate 206 serves as a shoulder belt 102, while the seat belt 200 extending from the buckle 106 to the support portion 94 side on the seat right side of the seat portion 90 via the tongue plate 206 serves as a lap belt 110.

Further, one end portion in a longitudinal direction of a lap-side branch belt 114 is joined to the lap belt 110 by sewing or the like, while the other end portion in the longitudinal direction of the lap-side branch belt 114 is fixed to a vehicle body floor via an anchor plate 208. With this configuration, even when the seat belt device 100 is configured as the three-point seat belt device, since one end portion in a longitudinal direction of the lap belt 110 is fixed to the seat portion 90, it is possible to improve the steering maneuverability of the seated occupant while restraining the waist of the seated occupant by the lap belt 110. Further, even when the lap belt 110 and the vehicle body floor are joined to each other via the lap-side branch belt 114, it is possible to suppress the influence of the lap-side branch belt 114 on rocking of the seat portion 90 with a simple configuration.

In this embodiment, it is configured that the flexibility of the lap-side branch belt 114 (crotch-side branch belt 124) is set higher than that of the lap belt 110 (crotch belt 120), thereby allowing rocking of the seat portion 90. Instead of this, it may be configured that the lap belt 110 (crotch belt 120) and the vehicle body floor are joined to each other via the lap-side branch belt 114 (crotch-side branch belt 124) in a slackened state at an initial position of the seat portion 90, thereby allowing rocking of the seat portion 90. That is, taking into account the rocking stroke of the seat portion 90 in response to the movement of the seated occupant, the length in the longitudinal direction of the lap-side branch belt 114 (crotch-side branch belt 124) may be set. With this configuration, when the seat portion 90 rocks, rocking of the seat portion 90 can be prevented from being restrained, by a slack portion (excess length portion) of the lap-side branch belt 114 (crotch-side branch belt 124). Accordingly, it is possible to suppress the influence of the lap-side branch belt 114 (crotch-side branch belt 124) on rocking of the seat portion 90 with the simple configuration.

In this case, the lap-side branch belt 114 (crotch-side branch belt 124) may be made of the same material as the lap belt 110 (crotch belt 120). Further, in this case, a tension roller may be provided to the vehicle seat 10 so that, for example, upon a collision of the vehicle, the tension roller may abut against the lap-side branch belt 114 (crotch-side branch belt 124) to cause the tension in the lap-side branch belt 114 (crotch-side branch belt 124).

In this embodiment, the one end portion in the longitudinal direction of the lap belt 110 (crotch belt 120) is fixed to the rocking frame 60. However, it may be configured that the one end portion in the longitudinal direction of the lap belt 110 (crotch belt 120) is fixed to the seat portion 90.

In this embodiment, the lap belts 110 are coupled to the buckle 106 via the second tongue plates 112. However, it may be configured that the other end portions in the longitudinal direction of the lap belts 110 are fixed directly to the buckle 106. For example, it may be configured that the buckle 106 is divided into two buckles, that the other end portions in the longitudinal direction of the lap belts 110 are respectively fixed to the two divided buckles, and that the two divided buckles are adapted to be engaged with each other.

In this embodiment, the vehicle seat 10 is the driver's seat. However, it may be an assistant driver's seat.

## Claims

1. A vehicle seat **characterized by** comprising:
a main frame (30) joined to a vehicle body floor;
a rocking frame (60) supported by the main frame (30) so as to be rockable about an axis along a vehicle front-rear direction, the rocking frame (60) fixed with a seat portion (90) configured to support hips of a seated occupant; and
a lap belt (110) extending from a buckle (106) via a member or directly and configured to be placed across a waist of the seated occupant to restrain the waist, the lap belt (110) having an end portion fixed to the rocking frame (60) or the seat portion (90).

2. The vehicle seat according to claim 1, wherein
the lap belt (110) is provided with a lap-side branch belt (114) extending from an intermediate portion in a longitudinal direction of the lap belt (110), and
the lap-side branch belt (114) joins the lap belt (110) and the vehicle body floor to each other so as to allow rocking of the seat portion (90).

3. The vehicle seat according to claim 2, wherein
a flexibility of the lap-side branch belt (114) is higher than a flexibility of the lap belt (110).

4. The vehicle seat according to claim 2 or 3, wherein
the lap belt (110) and the vehicle body floor are joined to each other via the lap-side branch belt (114) in a state where the lap-side branch belt (114) is slackened.

5. The vehicle seat according to any one of claims 1 to 4, further comprising a backrest portion (80) configured to support a back of the seated occupant, wherein
the backrest portion (80) is fixed to the main frame (30).

6. The vehicle seat according to any one of claims 1 to 5, wherein
the buckle (106) is disposed at a middle in a width direction of the seat portion (90), and
a pair of the lap belts (110) extends from the buckle (106) toward outer sides in a seat width direction, respectively.

7. The vehicle seat according to any one of claims 1 to 5, wherein
the buckle (106) is provided on one side in a width direction of the seat portion (90), and
the lap belt (110) extends from the one side in the width direction of the seat portion (90) to the other side in the width direction of the seat portion (90) so as to be placed across the waist of the seated occupant.
